(19) Europäisches Patentamt
European Patent Office
Office européen des brevets

(11) **EP 1 968 184 B1**

(12) **EUROPEAN PATENT SPECIFICATION**

(45) Date of publication and mention
of the grant of the patent:
**04.01.2012 Bulletin 2012/01**

(51) Int Cl.:
*H02P 23/14* (2006.01)   *H02P 21/00* (2006.01)
*B25J 9/16* (2006.01)   *G05B 19/19* (2006.01)

(21) Application number: **08001435.0**

(22) Date of filing: **25.01.2008**

(54) **Motor controller and motor control system**

Motorsteuerung und Motorsteuerungssystem

Contrôleur de moteur et système de contrôle de moteur

(84) Designated Contracting States:
**DE GB**

(30) Priority: **08.03.2007 JP 2007058275**

(43) Date of publication of application:
**10.09.2008 Bulletin 2008/37**

(73) Proprietor: **Hitachi Industrial Equipment Systems
Co., Ltd.
Chiyoda-ku
Tokyo 101-0022 (JP)**

(72) Inventors:
• **Nagura, Hirokazu
  Tokyo 100-8220 (JP)**
• **Ohashi, Hironori
  Chiba 275-0001 (JP)**
• **Takano, Yuri
  Chiba 275-0001 (JP)**

(74) Representative: **Kirschner, Klaus Dieter
Puschmann Borchert Bardehle
Patentanwälte Partnerschaft
Postfach 10 12 31
80086 München (DE)**

(56) References cited:
• **TUNGPATARATANAWONG S ET AL: "High performance robust motion control of industrial robot using parameter identification based on resonant frequency" INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 1, 2 November 2004 (2004-11-02), pages 111-116, XP010799697 ISBN: 978-0-7803-8730-0**
• **JOUVE D ET AL: "Autotuning of axis control systems for robots and machine tools" PROCEEDINGS OF THE INTERNATIONAL CONFERENCE ON INDUSTRIAL ELECTRONICS, CONTROL AND INSTRUMENTATION (IECON). KOBE, OCT. 28 - NOV. 1, 1991; [PROCEEDINGS OF THE INTERNATIONAL CONFERENCE ON INDUSTRIAL ELECTRONICS, CONTROL AND INSTRUMENTATION (IECON)], NE, vol. CONF. 17, 28 October 1991 (1991-10-28), pages 1106-1111, XP010042091 ISBN: 978-0-87942-688-0**

**Description**

The present invention relates to a motor controller that controls a motor connected to a load and a motor control system that includes the motor controller.

Many motors are used in industrial machines including semiconductor manufacturing equipment, machine tools, and injection molding machines. In particular, it is desired that parameters in a machine system be identified during an online operation so as to improve control performance.

As for motor controllers, Japanese Patent Laid-open No. 2005-168166 discloses a technique by which rigid-body parameters such as a total moment of inertia for a machine, a viscous friction coefficient, steady disturbance torque, and the like are identified during an actual operation, and identification results are used to automatically set control parameters for a position control unit, a speed control unit, and the like. In the technique disclosed in Japanese Patent Laid-open No. 2005-168166, time-series data for motor torque, acceleration, and motor rotational speed during forward rotation and reverse rotation are used to identify parameters by a recursive least square method.

Another technique that identifies not only rigid-body characteristics but also resonant characteristics is also disclosed in Japanese Patent Laid-open No. Hei 7(1995)-152429. In the technique in Japanese Patent Laid-open No. Hei 7(1995)-152429, white noise is applied as a motor torque value. A fast Fourier transform (FFT) is performed on motor torque and motor rotational speed obtained at that time. Curve fitting is then performed on a gain-frequency diagram resulting from the FFT so as to identify parameters in a two-inertia resonant system. To eliminate an effect of coulomb friction on identified parameters in the resonant system, the technique in Japanese Patent Laid-open No. Hei 7(1995)-152429 uses information on rigid-body parameters such as a total moment of inertia of a machine, a viscous friction coefficient, steady disturbance torque, and the like obtained from a separately provided rigid-body parameter identifying part to perform a compensation calculation.

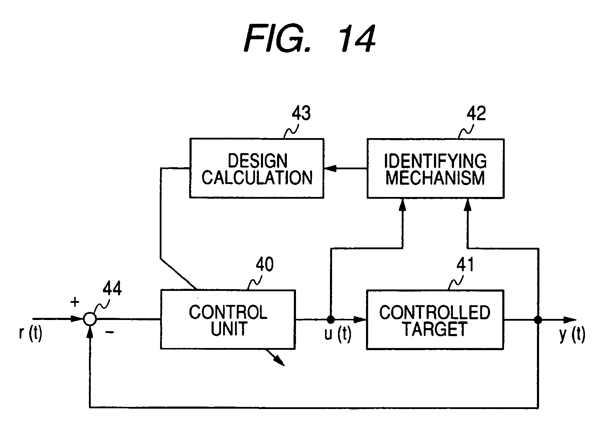

More general techniques that identify both rigid-body characteristics and resonant characteristics include, for example, a self-tuning regulator described in Non-Japanese Patent Laid-open No. 2005-168166. The technique in Non-Japanese Patent Laid-open No. 2005-168166 is a control system that causes an output signal y (t) to converge to a target signal r (t); a method of least squares is applied to time-series data of an input signal u (t) supplied to a controlled target 41 and the output signal y (t) from the controlled target 41 to have an identifying mechanism 42 identify transmission functions in a plant (see FIG. 14).

In the technique in Japanese Patent Laid-open No. 2005-168166, parameters that can be identified are limited to rigid-body parameters. So, the technique in Japanese Patent Laid-open No. 2005-168166 is not suitable when control parameters are automatically set with resonant characteristics in a machine system taken into consideration or control parameters of a damping control unit described later are automatically set.

The technique in Japanese Patent Laid-open No. Hei 7(1995)-152429 can identify both rigid-body characteristics and resonant characteristics in a machine system. Since white noise needs to be applied, however, usage conditions are limited to offline adjustment. The third conventional technique has the advantage that transmission functions of a controlled target can be identified online, but when an ordinary recursive least square method is selected as the identifying algorithm, the amount of calculation is proportional to the square of the number of parameters (see Non-Japanese Patent Laid-open No. Hei 7(1995)-152429, Yoji Iiguni, "Adaptive signal processing algorithm", Baifukan, 2000, Chapter 4). For this reason, an identifying unit must be mounted in a computing machine having a sufficient calculation capacity.

Accordingly, control parameters can be automatically set in a position control unit, a speed control unit, and the like, and damping control parameters described in Japanese Patent Laid-open No. 2004-187432 can be automatically set with high precision, enabling high-performance control to be performed easier.

The publication "TUNGPATARATANAWONG S. ET AL: "High performance robust motion control of industrial robot using parameter identification based on resonant frequency" INDUSTRIAL ELECTRONICS SOCIETY, 2004. IECON 2004. 30TH ANNUAL CONFERENCE OF IEEE BUSAN, SOUTH KOREA 2-6 NOV. 2004, PISCATAWAY, NJ, USA,IEEE, vol. 1,2 November 2004 (2004-11-02), pages 111-116, XP01 0799697 ISBN: 978-0-7803-8730-0" deals with the controller design based on the model of the mechanical system. The parameters are evaluated according to the two-inertia model. The object is to achieve more control accuracy in comparison to the conventional identification method which uses both the constant speed test and the acceleration speed test.

An object of the present invention is to provide a motor controller and motor control system that can identify both rigid-body characteristics and resonant characteristics of a controlled target in an online state with a small amount of calculation.

For this purpose, the motor controller is configured according to claim 1 and the motor control system is configured according to claim 12. Preferred embodiments of the invention are characterized in the sub-claims.

Embodiments of the invention are now described with reference to the drawings.

FIG. 1 is a block diagram that indicates a model of a controlled target including a motor, load, and connecting shaft.
FIG. 2 is a block diagram that indicates a controlled two-inertia model.

FIG. 3A is block diagram that indicate an equivalent two-inertia model $G_{MB}$ (s).

FIG. 3B is block diagram that indicate an approximate two-inertia model $G_{MA}$ (s).

FIG. 4 is a block diagram that indicates the structure of a motor control system in a first embodiment of the present invention.

FIG. 5 is a block diagram that indicates the structure of an auto tuner in the first embodiment.

FIG. 6 is a schematic diagram that indicates the structure of a rigid-body model in the first embodiment.

FIG. 7 is a schematic diagram that indicates the structure of a resonant model in the first embodiment.

FIG. 8 is a block diagram that indicates the structure of a resonant model identifying part in the first embodiment.

FIG. 9 is a flowchart that indicates the entire processing in the first embodiment.

FIG. 10 is a block diagram that indicates the structure of a motor control system in a second embodiment of the present invention.

FIG. 11 is a block diagram that indicates the structure of a motor control system in a third embodiment of the present invention.

FIG. 12 is a flowchart that indicates the entire processing in the third embodiment.

FIG. 13 is a block diagram that indicates the structure of a motor control system in a fourth embodiment of the present invention.

FIG. 14 is an example of the prior art.

Basic principle

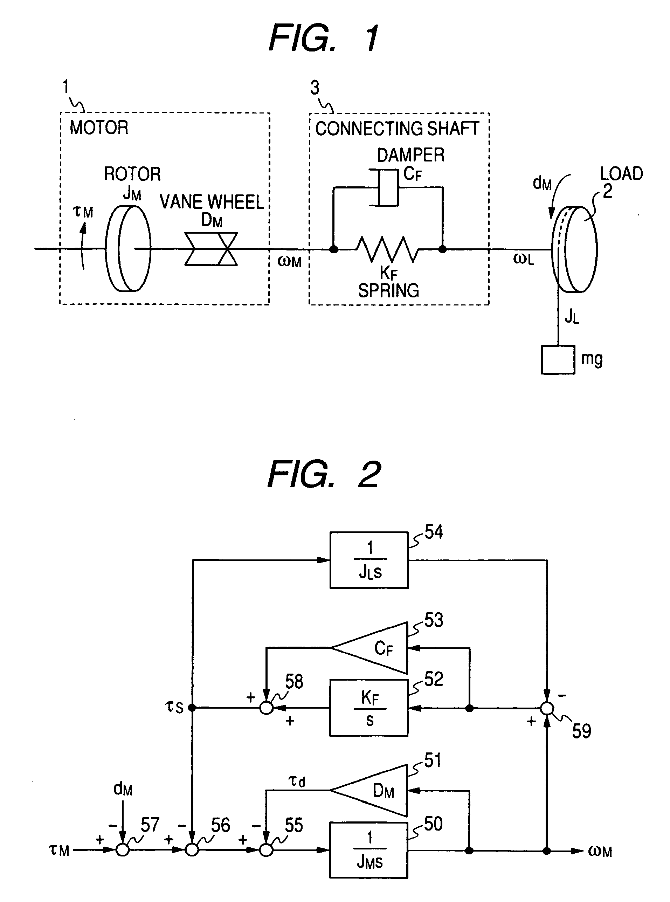

A machine system used as a controlled target in embodiments described below will be described with reference to FIG. 1. In this machine system, a motor 1 and a load 2 are interconnected through a connecting shaft 3. To simplify a description that follows, the controlled machine system is assumed to comprise two inertial models. That is, it is assumed that the motor 1 has a motor shaft represented by a vane wheel with a viscous friction coefficient $D_M$ and a rotor with a motor moment $J_M$, the load 2 is, for example, a circular plate with a load moment $J_L$ of inertia, and the connecting shaft 3 is a spring or dumper with a viscous friction coefficient $C_F$ and a spring constant $K_F$. The motor 1 is assumed to rotate at a motor torque of $\tau_M$ and a motor rotational speed $\omega_M$. The load 2 is assumed to receive a steady disturbance torque value $d_M$, which is corrected so as to be handled for the motor, due to, for example, a gravity of mg applied to its circumference and thereby rotate at a load rotational speed $\omega_L$.

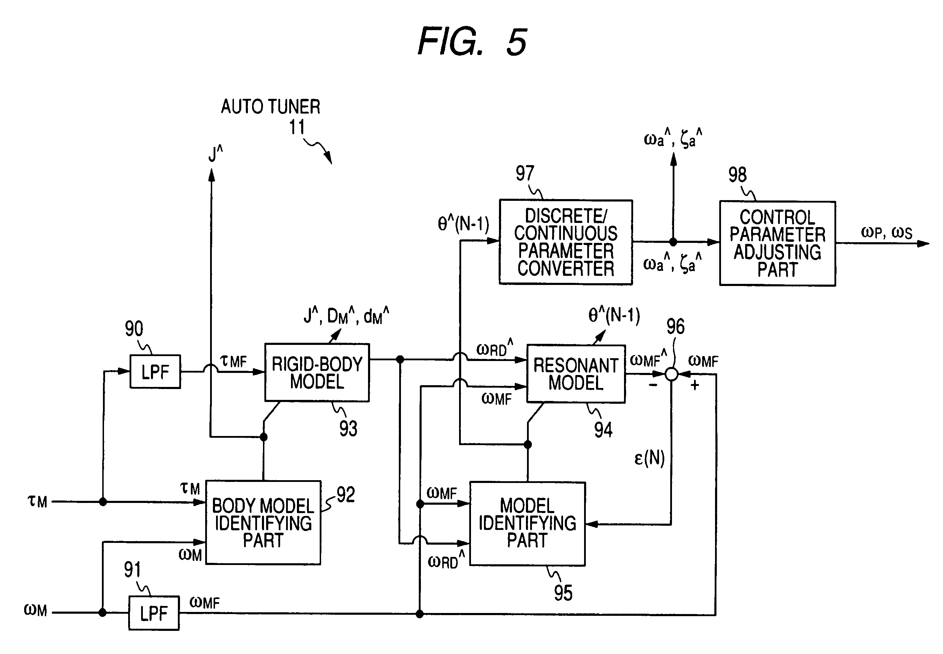

In each embodiment, the controlled machine system in FIG. 1 is handled as a rigid-body model and a resonant model that are connected in series, and parameters set in these two models are separately identified by a rigid-body model identifying part and a resonant model identifying part (see FIG. 5) so as to prevent the amount of calculation from being proportional to the square of the number of parameters to be identified.

Specifically, the rigid-body model identifying part first uses the motor torque $\tau_M$ and motor rotational speed $\omega_M$ to determine rigid-body parameters such as an estimated total moment of inertia $J^{\wedge}$, estimated viscous friction coefficient $D_M^{\wedge}$, estimated steady disturbance torque value $d_M^{\wedge}$ by the method described in Japanese Patent Laid-open No. 2005-168166 or Non-Japanese Patent Laid-open No. 2005-168166 (Takashi Suzuki, "Adaptive control", Corona Publishing, 2001, Chapter 1). Rigid-body models parameters determined in advance are then set in the rigid-body model, and an estimated rigid-body rotational speed $\omega_{RD}^{\wedge}$ is calculated. Equation (1) is used for this calculation for the rigid-body model; s in the equation is a Laplace operator.

$$\omega_{RD}{}^{\bar{\ }} = (\tau_M - d_M{}^{\bar{\ }}) \diagup (J^{\bar{\ }} \cdot s + D_M{}^{\bar{\ }}) \quad \cdots \cdots \cdots \cdots (1)$$

The resonant model identifying part identifies v resonant parameters, by which a resonant model is determined, by using a recursive least square method (see Non-Japanese Patent Laid-open No. 2005-168166 or Non-Japanese Patent Laid-open No. Hei 7(1995)-152429), according to an estimated rigid-body rotational speed value $\omega_{RD}^{\wedge}$ calculated from equation (1) and the motor rotational speed $\omega_M$.

This completes the overview of the basic principle. Now, it will be described in detail that the controlled machine system can be approximated to the rigid-body model and resonant model that are connected in series. In FIG. 2, variable $\tau_M$ is the value of torque generated in the motor, variable $\omega_M$ is the motor rotational speed, variable $\tau_S$ is the value of torque generated in the motor when the connecting shaft is twisted, variable $\tau_d$ is the value of viscous friction torque exerted on the motor shaft, and s is a Laplace operator.

In the two-inertia model shown in FIG. 2, suppose that the steady disturbance torque value $d_M$, which is corrected so as to be handled for the motor shaft, and the viscous friction coefficient $D_M$ exerted on the motor shaft are both 0. The transmission function $G_{MR}$ (s) of the motor rotational speed $\omega_M$ corresponding to the motor generating torque $\tau_M$ that is generated in the motor under this condition is represented as in equation (2).

$$G_{MR}(s) = \omega_M(s)/\tau_M(s) = 1/\{(J_M+J_L)s\} \cdot (\omega_m/\omega_a)^2 \cdot (s^2+2\zeta_a\omega_a s+\omega_a^2)/(s^2+2\zeta_m\omega_m s+\omega_m^2) \cdots \cdots (2)$$

In equation (2), $\omega_a$ is an anti-resonant angular frequency, $\zeta_a$ is an attenuation coefficient at an anti-resonant point, and $\omega_m$ is a resonant angular frequency, and $\zeta_m$ is an attenuation coefficient at a resonant point, which are respectively represented as in equations (3) to (6), by using $J_M$, $J_L$, $K_F$, and $C_F$.

$$\omega_a = \sqrt{(K_F/J_L)} \cdots \cdots \cdots \cdots \cdots \cdots (3)$$

$$\zeta_a = C_F/(2\sqrt{(J_L \cdot K_F)}) \cdots \cdots \cdots \cdots \cdots (4)$$

$$\omega_m = \sqrt{(K_F(J_M+J_L)/(J_L \cdot J_M))} \cdots \cdots \cdots \cdots (5)$$

$$\zeta_m = C_F/2 \cdot \sqrt{((J_M+J_L)/(K_F \cdot J_L \cdot J_M))} \cdots \cdots (6)$$

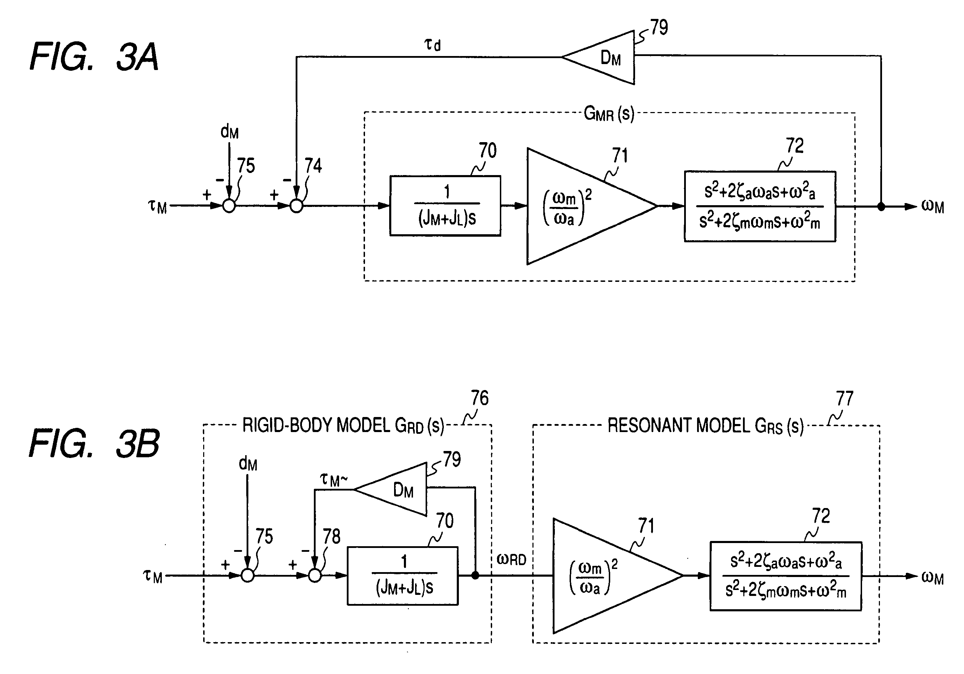

The two-inertial model in FIG. 2 is equal to a case in which the steady disturbance torque value $d_M$, which is corrected so as to be handled for the motor shaft, and the viscous friction torque value $\tau_d$ exerted on the motor shaft are subtracted from the motor generating torque $\tau_M$, which is an input signal to the transmission function $G_{MR}(s)$ represented as in equation (2). Accordingly, the two-inertia model in FIG. 2 is equivalent to the model shown in FIG. 3A. The equivalent two-inertia model in FIG. 3A, obtained in this way, is represented simply, as compared with FIG. 2, but there is a feedback loop for $G_{MR}(s)$ because an equation that generates the viscous friction torque value $\tau_d$ exerted on the motor shaft is equation (7) in which the motor rotational speed $\omega_M$ is an input signal.

$$\tau_d = D_M \cdot \omega_M \cdots \cdots \cdots \cdots \cdots \cdots \cdots \cdots (7)$$

Therefore, $G_{MR}(s)$ cannot be divided as it is.
To address this problem, an approximate two-inertia model shown in FIG. 3B is used instead of the model shown in FIG. 3A. In FIG. 3B, the viscous friction torque value $\tau_d$ exerted on the motor shaft is replaced with an approximate viscous friction torque value $\tau_d\hat{}$ exerted on the motor shaft, which is calculated by equation (8).

$$\bar{\tau_d} = D_M \cdot \omega_{RD} \cdots \cdots \cdots \cdots \cdots \cdots \cdots (8)$$

In equation (8), the rigid-body rotational speed $\omega R_D$ used as an input signal is obtained from the input part of the resonant model 77 shown in FIG. 3B. The model can then be divided, $\omega_{RD}$ being a boundary. $\omega_{RD}$ has rigid-body characteristics with less vibrating components compared with the motor rotational speed $\omega_M$. $\omega_{RD}$ will be referred to as the rigid-body rotational speed. A block that derives the rigid-body rotational speed from the input signal $\tau_M$ and steady disturbance torque value $d_M$ will be referred to as the rigid-body model, and another block that derives the motor rotational speed $\omega_M$ to which resonance characteristics are added from the rigid-body rotational speed $\omega_{RD}$ will be referred to as the resonant model.
There is approximation error when the equivalent two-inertia model shown in FIG. 3A is approximated as the rigid-body model and resonant model that are connected in series, as shown in FIG. 3B. Next, the approximation error will be considered in a frequency area. First, the transmission function in the rigid-body model in FIG. 3B is defined as $G_{RD}(s)$, and the transmission function in the resonant model also in FIG. 3B is defined as $G_{RS}(s)$. If the steady disturbance torque value $d_M$ is set to 0 to simplify the explanation, the transmission function $G_{RD}(s)$ of the rigid-body model is represented as in equation (9), in which s is a Laplace operator. The cutoff angular frequency $\omega rd$ in equation (9) is defined as in equation (10).

$$G_{RD}(s) = \omega_{RD}/\tau_M = (1/D_M) \cdot \omega_{rd}/(s + \omega_{rd}) \quad \cdots \quad (9)$$

$$\omega_{rd} = D_M/(J_M + J_L) \quad \cdots \cdots \cdots \cdots \cdots \cdots \quad (10)$$

As is clear from equation (9), it can be interpreted that the transmission function $G_{RD}(s)$ in the rigid-body model has characteristics obtained by multiplying the primary delay element with the cutoff angular frequency (= $\omega$rd [rad/s]) by a gain $1/D_M$.

The transmission function $G_{RS}(s)$ in the resonant model is represented as in equation (11).

$$G_{RS}(s) = (\omega_m/\omega_a)^2 \cdot (s^2 + 2\zeta_a\omega_a s + \omega_a^2)/(s^2 + 2\zeta_m\omega_m s + \omega_m^2) \quad \cdots \cdots \cdots \cdots \cdots \cdots \cdots \cdots \quad (11)$$

As is clear from equation (11), the transmission function $G_{RS}(s)$ in the resonant model has a minimum gain at the anti-resonant angular frequency $\omega$a when the gain in a low-frequency area is 1 and the gain in a high-frequency area is $(\omega m/\omega a)^2$, and has a maximum gain at the resonant angular frequency $\omega$m. Since preparation as described above is completed, in FIG. 3A, the transmission function of the motor rotational speed $\omega_M$ corresponding to the motor generating torque $\tau_M$ is defined as $G_{MB}(s)$.

Similarly, in the approximate two-inertia model in FIG. 3B, the transmission function of the motor rotational speed $\omega_M$ corresponding to the motor generating torque $\tau_M$ is defined as $G_{MA}(s)$. The ratio $G_{MA}(s)/G_{MB}(s)$ between the two transmission functions will be obtained as described below.

$G_{MB}(s)$ and $G_{MA}(s)$ are respectively represented as in equations (12) and (13).

$$G_{MB}(s) = ((1/(J_M + J_L)s)G_{RS})/(1 + (D_M/(J_M + J_L))s) \cdot G_{RS}) \quad \cdots \cdots \cdots \cdots \cdots \cdots \cdots \cdots \cdots \cdots \quad (12)$$

$$G_{MA}(s) = G_{RD}(s)/G_{RS}(s) \quad \cdots \cdots \cdots \cdots \cdots \cdots \quad (13)$$

$G_{MA}(s)/G_{MB}(s)$ is determined from equations (9), (10), (12), and (13), as indicated by equation (14).

$$G_{MA}(s)/G_{MB}(s) = (1 + (\omega_{rd}/s) \cdot G_{RS}(s))/(1 + (\omega_{rd}/s)) \quad \cdots \cdots \cdots \cdots \cdots \cdots \cdots \cdots \cdots \cdots \cdots \quad (14)$$

Equation (14) represents a ratio of the approximate two-inertia model $G_{MA}(s)$ shown in FIG. 3B to the equivalent two-inertia model $G_{MB}(s)$ shown in FIG. 3A. The ratio is preferably 1. That is, it suffices that the denominator and numerator in equation (14) preferably equal each other. However, the second term in the numerator additionally includes the resonant model characteristics $G_{RS}(s)$ described in equation (11), so it is apparent that the denominator does not equal the numerator. Since the low-frequency area gain of $G_{RS}(s)$ is 1 in the low-frequency area, however, the denominator nearly equals the numerator and the error is completely eliminated. In the high-frequency area, the high-frequency gain of $G_{RS}(s)$ is $(\omega m/(\omega a)^2$. Since ($\omega$rd/s) becomes small, however, both the denominator and numerator nearly equal 1. In this case as well, the error is completely eliminated.

The last problem to solve is phenomena at the anti-resonant point and resonant point of the resonant model characteristics $G_{RS}(s)$. To reduce the effect of minimum and maximum values taken by the resonant model characteristics $G_{RS}(s)$, ($\omega$rd/s) needs to be sufficiently small at the anti-resonant point and resonant point of the resonant model characteristics $G_{RS}(s)$. This requirement is satisfied when a breakpoint angular frequency $\omega$rd of the rigid-body model is sufficiently smaller than the anti-resonant angular frequency $\omega$a of $G_{RS}(s)$. That is, when $\omega$rd << $\omega$a, the approximate two-inertia model shown in FIG. 3B can be used. Accordingly, the rigid-body model and resonant model can be individually identified, and the conventional problem caused when the amount of calculation is proportional to the square of the number of parameters can thus be addressed. Equation (10) indicates that the requirement, $\omega$rd << $\omega$a, is satisfied when the viscous friction coefficient $D_M$ is small, so the requirement is satisfied when an ordinary motor is used.

According to this basic principle, both the controlled rigid-body characteristics and resonant characteristics can be identified online. When the control parameters to be set in the position control unit, the speed control unit, and the like are adjusted, the resonant characteristics can also be included in a consideration. Furthermore, since the controlled machine system is handed as a rigid-body model and a resonant model that are connected in series, identification becomes possible with a smaller amount of calculation than in the prior art, contributing to expansion of the application range.

First embodiment

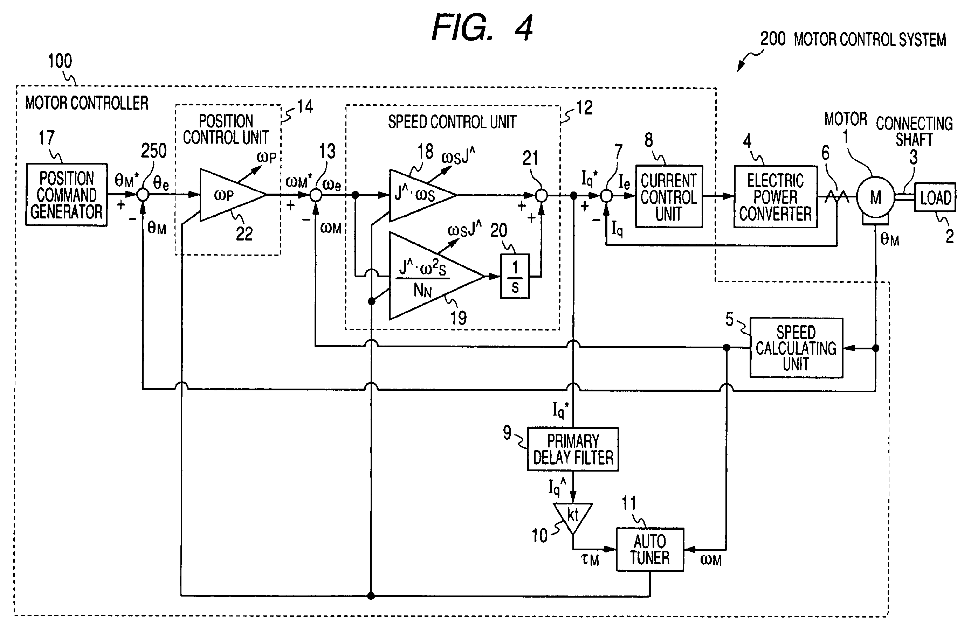

The motor control system in an embodiment of the present invention will be described with reference to the block diagram in FIG. 4. In the embodiment in FIG. 4, auto tuning processing is performed, by which an optimum speed control unit gain and position control unit gain can be set even in a normal unit operation state, according to the mechanical characteristics of a load that constantly changes with time. This embodiment will be described in detail below.

The motor control system 200 in FIG. 4 includes a motor 1, a load 2 driven by the motor 1, a connecting shaft 3 for connecting the motor 1 to the load 2, an electric power converter 4 for driving the motor 1, a position detector 27 that is attached to the rotational axis of the motor 1 and outputs a detected position value $\theta_M$ of the rotational axis of the motor 1, a current detector 6 that detects a current that flows in the motor 1, and a motor controller 100.

The motor controller 100 includes a speed calculating unit 5, a current control unit 8, a first-order lag filter 9, a torque constant amplifier 10, an auto tuner 11, a speed control unit 12, a position control unit 14, a position command generator 17, and subtracters, 7, 13, and 250. When controlling the motor current that flows in the motor 1, the motor controller 100 performs dq vector conversion on the motor current to obtain an exciting axis component and a torque axis component that is electrically orthogonal to the exciting axis. Only a detected value Iq of the torque axis current will be described below. A value Id of the exciting axis component is usually set to 0, so its description will be omitted.

The speed calculating unit 5 calculates the motor rotational speed $\omega_M$ from a change in the detected position value $\theta_M$ with time.

The current detector 6 obtains a detected torque current value Iq and supplies it to the motor 1.

The subtracter 7 calculates a difference Ie in current between a torque current command value Iq* and the detected torque current value Iq supplied to the motor 1.

The current control unit 8 performs pulse width control for the electric power converter 4 according to the change Ie in current.

The first-order lag filter 9 receives the torque current command value Iq* and outputs an estimated torque current value Iq^; its gain crossover angular frequency is set so that it equals the gain crossover angular frequency of a current control system in the current control unit 8.

The torque constant amplifier 10 receives the estimated torque current value Iq^, calculates a motor torque value $\tau_M$, and sets a value equal to a torque constant kt of the motor 1.

The auto tuner 11 receives the motor torque value $\tau_M$ and time-series data of the motor rotational speed $\omega_M$, and outputs an estimated total moment of inertia J^ of the machine system comprising the motor 1, the connecting shaft 3, and the load 2, which is the target to drive, as well as an optimum gain crossover angular frequency $\omega_S$ of the speed control unit, and an optimum gain crossover angular frequency $\omega p$ of the position control unit.

The speed control unit 12 outputs the torque current command value Iq* according to a difference $\omega e$ in motor rotational speed. The speed control unit 12 has a proportional integral control structure; the speed control unit 12 performs calculation represented as in equation (15), in which s is a Laplace operator. The estimated total moment of inertia J^ and the gain crossover angular frequency $\omega_S$ in the speed control system, which are parameters set in a proportional amplifier 18 and integrating amplifier 19, are also updated at appropriate times by the auto tuner 11.

$$ Iq* = [J\omega_s\hat{} + (J\omega_s\hat{}^2 / N_N \cdot s)]\omega_e \cdots\cdots (15) $$

The subtracter 13 calculates the difference $\omega e$ in motor rotational speed between the motor rotational speed command value $\omega_M*$ and motor rotational speed $\omega_M$.

The position control unit 14 outputs the motor rotational speed command value $\omega_M*$ according to a difference $\theta e$ in motor rotational position. The position control unit 14 has a proportional control structure; the position control unit 14 uses a variable amplifier 22 to multiply the motor rotational speed difference $\theta e$ by the gain crossover angular frequency $\omega p$ of the position control unit, and outputs the resulting value as the motor rotational speed command value $\omega_M*$. The gain $\omega p$ is updated at appropriate times by the auto tuner 11.

The position command generator 17 generates a position control input command value $\theta_M*$, which is a target command value. The subtracter 250 calculates the motor position difference $\theta e$ between the position control input

command value $\theta_M$* and detected motor position value $\theta_M$. The position command generator 17 may be disposed outside the motor controller 100.

The structure of the auto tuner 11 will be described below in detail with reference to FIG. 5. The auto tuner 11 in FIG. 5 includes low-pass filters (LPFs) 90 and 91, a rigid-body model identifying part 92, a rigid-body model 93, a resonant model 94, a resonant model identifying part 95, a discrete/continuous parameter converter 97, a control parameter adjusting part 98, and an adder 96.

The LPFs 90 and 91, which are high-order low-pass filters, are used as anti-aliasing filters. Their cutoff frequencies are set to about half to one-third the sampling frequency of the auto tuner 11. The LPF 90 receives the motor torque value $\tau_M$, and outputs a filtered motor torque value $\tau_{MF}$; the LPF 91 receives the motor rotational speed $\omega_M$, and outputs a filtered motor rotational speed $\omega_{MF}$.

The rigid-body model identifying part 92 is structured by a known technique (see Japanese Patent Laid-open No. 2005-168166 and Non-Japanese Patent Laid-open No. 2005-168166) in which the motor torque value $\tau_M$ and motor rotational speed $\omega_M$ are used to output the estimated total moment of inertia J^, an estimated viscous friction coefficient $D_M$^, and an estimated steady disturbance torque value $d_M$^_f during the forward rotation or estimated steady disturbance torque value $d_M$^_r during the reverse rotation.

The rigid-body model 93 receives the filtered motor torque value $\tau_{MF}$ and outputs the estimated rigid-body rotational speed value $\omega_{RD}$^ by calculating equation (1) in real time. In this case, the identification results derived from the calculation by the rigid-body model identifying part 92 are used as the estimated total moment of inertia J^, estimated viscous friction coefficient $D_M$^, and estimated steady disturbance torque value $d_M$^, which are necessary for calculation in equation (1), making the estimated rigid-body rotational speed value $\omega_{RD}$^ highly accurate.

The resonant model 94 receives the estimated rigid-body rotational speed value $\omega_{RD}$^ output by the rigid-body model 93 and the filtered motor rotational speed $\omega_{MF}$, and outputs a filtered estimated motor rotational speed value $\omega_{MF}$^. The calculation equation used by the resonant model 94 is basically the same as the transmission function $G_{RS}$ (s) as described in the explanation of FIG. 3B. For convenience in parameter identification in a discrete time zone, which will be described later, an equation for one-stage-ahead (one-sample-ahead) prediction will be used, the equation being derived from an equation obtained by making the transmission function $G_{RS}$ (s) discrete.

The subtracter 96 calculates prediction error $\varepsilon$ (N) by subtracting $\omega_{MF}$^ from $\omega_{MF}$. The resonant model identifying part 95 uses the estimated rigid-body rotational speed value $\omega_{RD}$^ and filtered motor rotational speed $\omega_{MF}$, and outputs a previously estimated parameter vector value $\theta$^ (N - 1) necessary in the resonant model 94 to calculate the equation for one-stage-ahead (one-sample-ahead) prediction so that the prediction error $\varepsilon$ (N) output by the subtracter 96 by using the recursive least square method is minimized.

The discrete/continuous parameter converter 97 converts the previously estimated parameter vector value $\theta$^ (N - 1) output by the resonant model identifying part 95 to a continuous parameter to calculate an estimated anti-resonant angular frequency value $\omega a$^ and an estimated anti-resonant-point attenuation coefficient $\zeta a$^ as estimated values of the anti-resonant angular frequency value $\omega a$ and anti-resonant-point attenuation coefficient $\zeta a$ in the resonant model transmission function $G_{RS}$ (s) indicated in equation (11).

The control parameter adjusting part 98 uses the estimated anti-resonant angular frequency value $\omega a$^ and estimated anti-resonant-point attenuation coefficient $\zeta a$^ output by the discrete/continuous parameter converter 97 to determine and output a speed control gain crossover angular frequency $\omega_s$ and position control gain crossover angular frequency $\omega p$.

The blocks constituting the auto tuner 11 in FIG. 5 will be described below in succession in details.

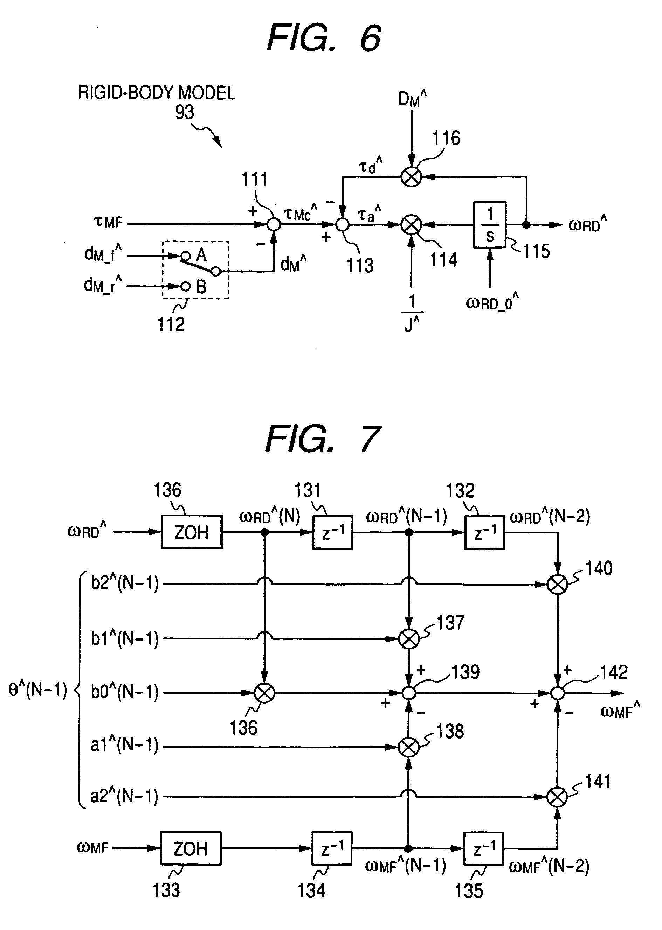

The rigid-body model identifying part 92 in FIG. 6 includes subtracters 111 and 113, multipliers 114 and 116, an integrator 115, and a selector switch 112.

The selector switch 112 selects a contact A when the motor rotates in the normal direction, and selects another contact B when the motor rotates in the reverse direction. Accordingly, an output signal $d_M$^ from the selector switch 112 is correctly set to the estimated steady disturbance torque value $d_M$^_f during the forward rotation when the motor rotates in the normal direction or to the estimated steady disturbance torque value $d_M$^_r during the reverse rotation when the motor rotates in the reverse direction.

The subtracter 111 subtracts the estimated steady disturbance torque value $d_M$^ output by the selector switch 112 from the filtered motor torque value $\tau_{MF}$ to calculate an estimated motor torque value $\tau_{MC}$^ for which the steady disturbance torque value is considered. The subtracter 113 subtracts the estimated viscous friction torque value $\tau_d$^ exerted on the motor shaft, which is output by the multiplier 116, from the estimated motor torque value $\tau_{MC}$^ for which the steady disturbance torque value is considered, which is output by the subtractor 111, and outputs an estimated motor acceleration/deceleration $\tau a$^. The multiplier 114 multiplies the estimated motor acceleration/deceleration $\tau a$^ output by the subtractor 113 by the reciprocal of the estimated total moment of inertia J^.

The integrator 115 integrates the multiplication result produced by the multiplier 114 to obtain the estimated rigid-body rotational speed value $\omega_{RD}$^. To eliminate an effect of stationary friction torque for which moldering is not performed, the integration is performed only when the motor acceleration and motor speed reach at least fixed values.

An initial estimated rigid-body rotational speed value $\omega_{RD}{}^\wedge\_0$, which is an initial value at the start of the integration, is set to the filtered motor rotational speed $\omega_{MF}$ at the start of the integration.

The multiplier 116 multiplies the estimated rigid-body rotational speed value $\omega_{RD}{}^\wedge$ output by the integrator 115 by the estimated viscous friction coefficient $D_M{}^\wedge$ and outputs the estimated viscous friction torque value $\tau_d{}^\wedge$ exerted on the motor shaft.

This completes the description of the example of the rigid-body model that calculates the estimated rigid-body rotational speed value $\omega_{RD}{}^\wedge$ from the filtered motor torque value $\tau_{MF}$. Next, an example of the resonant model 94, which calculates the filtered estimated motor rotational speed value $\omega_{MF}{}^\wedge$ from the estimated rigid-body rotational speed value $\omega_{RD}{}^\wedge$ obtained as described above and the filtered motor rotational speed $\omega_{MF}$, will be described in detail. To implement the resonant model 94 in a discrete time zone, the transmission function $G_{RS}$ (s) of the resonant model represented in equation (11) undergoes zero-pole matching z-transform to make the resonant model 94 discrete. In the zero-pole matching z-transform, when the sampling frequency is denoted T, the pole and zero point s of a continuous transmission function are respectively mapped to the pole and zero point z (= $e^{sT}$) of a discrete transmission function. After the zero-pole matching z-transform, the discrete transmission function $G_{RS}$ (z) corresponding to $G_{RS}$ (s) can be represented as in equation (16). Coefficients a1, a2, b0, b1, and b2 in equation (16) can also be represented as in equations (17) to (21).

$$G_{RS}(z) = (b_0 + b_1 z^{-1} + b_2 z^{-2}) / (1 + a_1 z^{-1} + a_2 z^{-2}) \quad \cdots\cdots\cdots\cdots (16)$$

$$a_1 = -2 e^{-a_d T} \cos(b_d T) \quad \cdots\cdots\cdots (17)$$

$$a_2 = e^{-2 a_d T} \quad \cdots\cdots\cdots (18)$$

$$b_0 = K \quad \cdots\cdots\cdots (19)$$

$$b_1 = -2 K e^{-a_n T} \cos(b_n T) \quad \cdots\cdots\cdots (20)$$

$$b_2 = K e^{-2 a_n T} \quad \cdots\cdots\cdots (21)$$

K in equations (19) to (21) is defined as in equation (22).

$$K = (1 - 2 e^{-a_d T} \cos(b_d T) + e^{-2 a_d T}) / (1 - 2 e^{-a_n T} \cos(b_n T) + e^{-2 a_n T}) \quad \cdots\cdots\cdots (22)$$

Coefficients $a_n$, $b_n$, $a_d$, and $b_d$ in equations (17), (18), and (20) to (22) can be represented as in equations (23) to (26) below by using parameters $\omega a$, $\zeta a$, $\omega m$, and $\zeta m$ in the transmission function $G_{RS}$ (s) of the resonant model in the continuous area.

$$a_n = \zeta_a \omega_a \quad \cdots\cdots\cdots (23)$$

$$b_n = \omega_a \sqrt{(1 - \zeta_a{}^2)} \quad \cdots\cdots\cdots (24)$$

$$a_d = \zeta_m \omega_m \quad \cdots\cdots\cdots (25)$$

$$b_d = \omega_m \sqrt{(1 - \zeta_m{}^2)} \quad \cdots\cdots\cdots (26)$$

The continuous transmission function $G_{RS}$ (s) can be converted to its corresponding discrete transmission function $G_{RS}$ (z) by using the above relational equations (16) to (26). Conversely, it is also possible to calculate parameters $\omega a$, $\xi a$, $\omega m$, and $\zeta m$ in $G_{RS}$ (s) from the coefficients b0, b1, b2, a1, and a2 in $G_{RS}$ (z). Accordingly, when the resonant model 94 is structured so as to calculate the filtered estimated motor rotational speed value $\omega_{MF}{}^\wedge$ according to equation (16), if the resonant model identifying part 95 adjusts the above coefficients b0, b1, b2, a1, and a2 so that the prediction error $\varepsilon$ (N) between the filtered estimated motor rotational speed value $\omega_{MF}{}^\wedge$ and the filtered motor rotational speed $\omega_{MF}$ is minimized, resonant model identification can be implemented. The equation to calculate the filtered estimated motor rotational speed value $\omega_{MF}{}^\wedge$ in the resonant model 94 will be described below.

The transmission function to be identified is represented as in equation (16). Since the input signal to the transmission function is the estimated rigid-body rotational speed value $\omega_{RD}{}^\wedge$ and the output signal from the transmission function is the filtered motor rotational speed $\omega_{MF}$, equation (27) holds.

$$\omega_{MF}/\omega_{RD}\hat{\ } = (b_0 + b_1 z^{-1} + b_2 z^{-2}) / (1 + a_1 z^{-1} + a_2 z^{-2}) \quad \cdots \cdots \cdots \cdots (27)$$

Equation (27) can be rewritten as in equation (28).

$$\omega_{MF} = -a_1 \omega_{MF} z^{-1} - a_2 \omega_{MF} z^{-2} + b_0 \omega_{RD}\hat{\ } + b_1 \omega_{RD}\hat{\ } z^{-1} + b_2 \omega_{RD} z^{-2} \quad \cdots \cdots \cdots \cdots (28)$$

In equation (28), $z^{-1}$ indicates a value one sample before and $z^{-2}$ indicates a value two samples before, so it can be said that equation (28) is a relational equation that calculates the current filtered motor rotational speed $\omega_{MF}$ from the previous and current estimated rigid-body rotational speed values $\omega_{RD}{}^\wedge$ and the previous filtered motor rotational speed $\omega_{MF}$.

When the coefficients b0, b1, b2, a1, and a2 in equation (28) are replaced with the estimated values one sample before rather than true values, equation (29) holds.

$$\omega\hat{\ }_{MF} = \theta\hat{\ }(N-1)^T \phi(N) \quad \cdots \cdots \cdots \cdots \cdots (29)$$

The elements of a previously estimated parameter vector value $\theta^\wedge$ (N - 1) in equation (29) are the estimated values of the coefficients b0, b1, b2, a1, and a2 one sample before, as indicated by equation (30).

$$\theta\hat{\ }(N-1) = [a_1\hat{\ }(N-1), a_2\hat{\ }(N-1), b_0\hat{\ }(N-1), b_1\hat{\ }(N-1), b_2\hat{\ }(N-1)]^T \quad \cdots \cdots \cdots \cdots (30)$$

As seen from equation (31), the elements of data vector $\phi$ (N) are $\omega_{MF}$ (N - 1) indicating $\omega_{MF}$ one sample before, $\omega_{MF}$ (N - 2) indicating $\omega_{MF}$ two samples before, $\omega_{RD}{}^\wedge$(N) indicating current $\omega_{RD}{}^\wedge$, $\omega_{RD}{}^\wedge$(N - 1) indicating $\omega_{RD}{}^\wedge$ one sample before, and $\omega_{RD}{}^\wedge$ (N - 2) indicating $\omega_{RD}{}^\wedge$ two samples before.

$$\phi(N) = [-\omega_{MF}(N-1), -\omega_{MF}(N-2), \omega_{RD}\hat{\ }(N), \omega_{RD}\hat{\ }(N-1), \omega_{RD}\hat{\ }(N-2)]^T \quad \cdots \cdots \cdots \cdots (31)$$

$\omega_{MF}{}^\wedge$ in equation (29) is the current filtered estimated motor rotational speed value; since it is distinguished from the filtered motor rotational speed $\omega_{MF}$, it is clear that the coefficients b0, b1, b2, a1, and a2 have been replaced with the estimated values one sample before rather than true values.

FIG. 7 is a structural diagram that concretizes equation (29).

Included in the structural diagram are zero-order hold elements 133 and 136, a one-sample time delay elements 131, 132, 134, and 135, multipliers 136, 137, 138, 140, and 141, and addition and subtraction elements 139 and 142.

The structure receives estimated rigid-body rotational speed value $\omega_{RD}{}^{\wedge}$, estimated values of the b0, b1, b2, a1, and a2 one sample before, which are elements of the previously estimated parameter vector value $\theta^{\wedge}$ (N - 1), and filtered estimated motor rotational speed value $\omega_{MF}{}^{\wedge}$, and uses these received values to calculate the filtered estimated motor rotational speed value $\omega_{MF}{}^{\wedge}$.

The resonant model identifying part 95 shown in FIG. 5 will be described next in detail. A basic operation of the resonant model identifying part 95 is to update the estimated parameter vector value $\theta^{\wedge}$ (N) at intervals of the sample cycle T by using the recursive least square method (see Non-Japanese Patent Laid-open No. Hei 7(1995)-152429).

Equation (32) is used for update calculation. To perform this update, a value obtained by multiplying the gain vector k (N) by the prediction error $\varepsilon$ (N) is added to the previously estimated parameter vector value $\theta^{\wedge}$ (N - 1), the initial value of which is 0. The gain vector k (N) used in equation (32) is obtained from a matrix operation according to equation (33). In equation (33), a matrix P (N - 1) indicates the previous value of a covariance matrix P (N) comprising five rows by five columns, and $\lambda$ is forgetting coefficient, which is greater than 0 and equal to or smaller than 1.

The matrix P (N) is updated by equation (34). A value obtained by multiplying a unit matrix comprising five rows by five columns by a sufficient large positive constant is used as an initial value P (-1) of the matrix P (N).

$$\theta^{\wedge}\ (N) = \theta^{\wedge}\ (N-1) + k\ (N)\ \varepsilon\ (N) \cdots\cdots\cdots\cdots (3\,2)$$

$$k\ (N) = \{P\ (N-1) \cdot \phi\ (N)\} \diagup \{\lambda + \phi^{T}\ (N)\ P\ (N-1)\ \phi\ (N)\}$$
$$\cdots\cdots\cdots\cdots\cdots\cdots\cdots\cdots\cdots (3\,3)$$

$$P\ (N) = 1 \diagup \lambda\ \{P\ (N-1) - k\ (N)\ (\phi^{T}\ (N)\ P\ (N-1)\,)\,\}\ (3\,4)$$

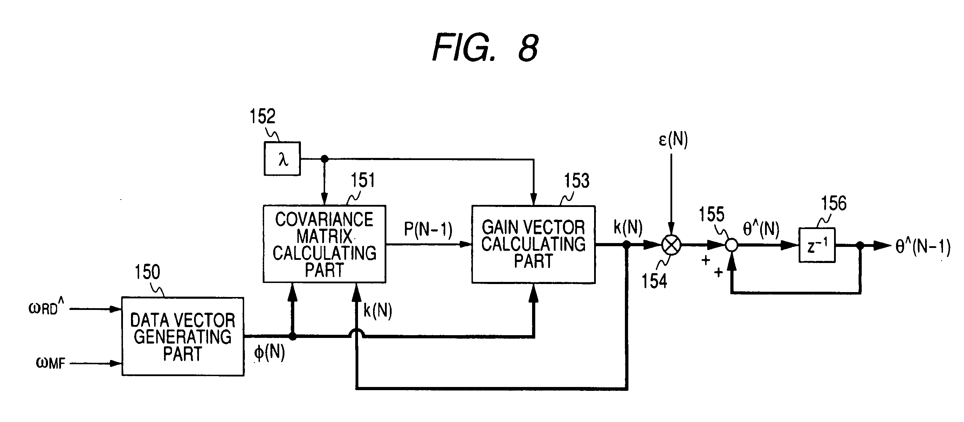

FIG. 8 is a structural diagram that concretizes equations (32), (33), and (34) described above. The structure includes a data vector generating part 150, a covariance matrix calculating part 151, a memory 152, a gain vector calculating part 153, a multiplier 154, an adder 155, and a one-sample time delay element 156.

The data vector generating part 150 generates the vector elements in equation (31) from the estimated rigid-body rotational speed value $\omega_{RD}{}^{\wedge}$ and the filtered motor rotational speed $\omega_{MF}$, and outputs the generated vector elements as the data vector $\phi$ (N). The covariance matrix calculating part 151 uses the forgetting coefficient $\lambda$, data vector $\phi$ (N), and gain vector k (N) to calculate the covariance matrix P (N) according to equation (34), and outputs its previous value P (N - 1). The memory 152 stores the forgetting coefficient $\lambda$, which is greater than 0 and equal to or smaller than 1. The gain vector calculating part 153 uses the forgetting coefficient $\lambda$, previous covariance matrix value P (N - 1), and data vector $\phi$ (N) to calculate the gain vector k (N) according to equation (33), and outputs the calculation result. The multiplier 154 multiplies the gain vector k (N) output by the gain vector calculating part 153 by the prediction error $\varepsilon$ (N). The adder 155 adds the output result from the multiplier 154 to the previously estimated parameter vector value $\theta^{\wedge}$ (N - 1). The one-sample time delay element 156 receives the estimated parameter vector value $\theta^{\wedge}$ (N) and outputs the previously estimated parameter vector value $\theta^{\wedge}$ (N - 1).

Processing by the discrete/continuous parameter converter 97 shown in FIG. 5 will be described next by using equations. The discrete/continuous parameter converter 97 receives the previously estimated parameter vector value $\theta^{\wedge}$ (N - 1) to calculate the machine-system estimated anti-resonant angular frequency value $\omega a^{\wedge}$ and machine-system estimated anti-resonant-point attenuation coefficient $\zeta a^{\wedge}$ according to equations (35) and (36), and outputs the calculated values.

$$\omega_{a}{}^{\wedge} = \sqrt{}\ (a_{n}{}^{\wedge}2 + b_{n}{}^{\wedge}2) \cdots\cdots\cdots\cdots\cdots\cdots (3\,5)$$

$$\zeta_{a} = a_{n}{}^{\wedge} \diagup \sqrt{}\ (a_{n}{}^{\wedge}2 + b_{n}{}^{\wedge}2) \cdots\cdots\cdots\cdots (3\,6)$$

In equations (35) and (36), $a_{n}{}^{\wedge}$ and $b_{n}{}^{\wedge}$ are each the sampling cycle T. They are calculated according to equations (37) and (38).

$$a_{n}{}^{\wedge} = -1 \diagup (2\,T) \cdot \ln\ [b_{2}{}^{\wedge}\ (N-1) \diagup b_{0}{}^{\wedge}\ (N-1)\,] \cdots (3\,7)$$

$$b_n = (1/T) \cdot arccos[-b_1 (N-1) / \{2\sqrt{(b_0 (N-1) \cdot b_2 (N-1))\}}] \quad \cdots\cdots\cdots\cdots\cdots\cdots\cdots\cdots (38)$$

Of these continuous parameters obtained in this way, the control parameter adjusting part 98 performs adjustment particularly based on the machine-system estimated anti-resonant angular frequency value $\omega a^$. For example, the control parameter adjusting part 98 sets the speed control gain crossover angular frequency $\omega_s$ to $\omega a^$ multiplied by 2 and also sets the position control gain crossover angular frequency $\omega_P$ to $\omega a^$ divided by 3.5.

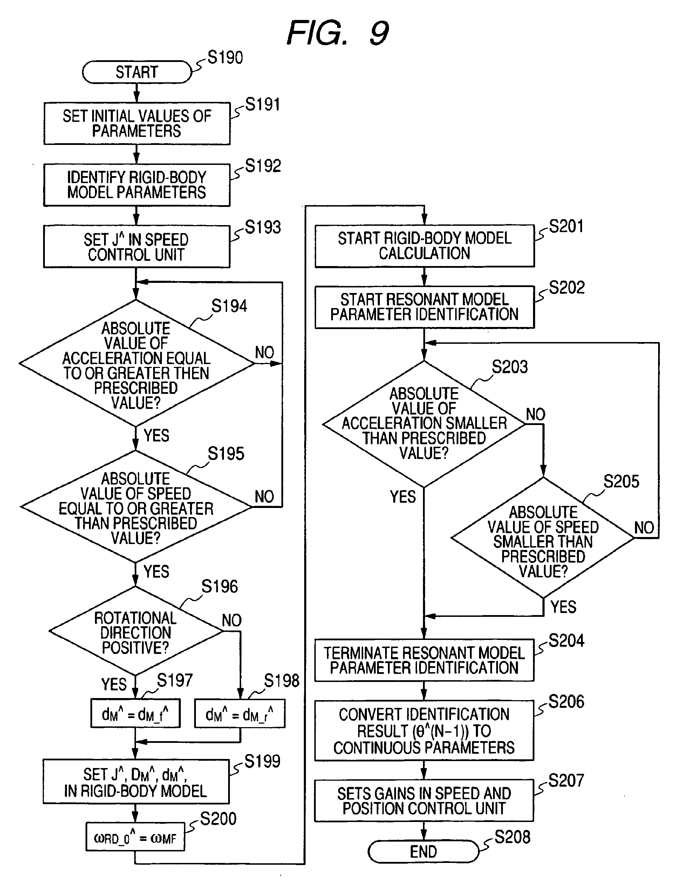

Next, the entire sequence in parameter adjustment in the first embodiment will be described with reference to FIG. 9. Processing in this sequence is performed from time to time (S 190). The motor controller 100 sets initial values of the parameters in the speed control unit and position control unit (S191). For example, the motor controller 100 sets $N_N$ to 10, $\omega_s$ to $2\pi \times 30$ Hz, $\omega_P$ to $\omega_S/7$, and $J^$ to the moment of inertia of the motor alone. The motor controller 100 then identifies only the rigid-body model parameters online to obtain the estimated total moment of inertia $J^$, the estimated viscous friction coefficient $D_M^$, the estimated steady disturbance torque value $d_M^\_f$ during the forward rotation, and the estimated steady disturbance torque value $d_M^\_r$ during the reverse rotation (S192). Next, the motor controller 100 sets the estimated total moment of inertia $J^$ in the speed control unit (S193).

Next, the motor controller 100 calculates acceleration $\alpha_{MF}$ from the filtered motor rotational speed $\omega_{MF}$, and determines whether the absolute value of $\alpha_{MF}$ is equal to or greater than a prescribed value $\alpha_A$ (S 194). If the absolute value is less than the prescribed value $\alpha_A$ (producing a No result in S194), the motor controller 100 repeats the decision process S194. If the absolute value is equal to or greater than the prescribed value $\alpha_A$ (producing a Yes result in S194), the motor controller 100 proceeds to decision process S 195.

In decision process S 195, the motor controller 100 determines whether the absolute value of the filtered motor rotational speed $\omega_{MF}$ is equal to or greater than a prescribed value $\omega_A$ (S195). If the absolute value is less than the prescribed value $\omega_A$ (producing a No result in S195), the motor controller 100 returns to the decision process S194. If a Yes result is produced in the decision process S195, the motor controller 100 proceeds to decision process S 196.

In decision process S 196, the motor controller 100 determines the direction of rotation from the sign of the filtered motor rotational speed $\omega_{MF}$. If $\omega_{MF}$ is greater than 0 (producing a Yes result in decision process S 196), the motor controller 100 proceeds to process S 197, where the motor controller 100 sets the estimated steady disturbance torque value $d_M^\_f$ during the forward rotation as the estimated steady disturbance torque value $d_M^$ and then proceeds to process S199. If $\omega_{MF}$ is not greater than 0 (producing a No result in S 196), the motor controller 100 proceeds to process S 198, where the motor controller 100 sets the estimated steady disturbance torque value $d_M^\_r$ during the reverse rotation as the estimated steady disturbance torque value $d_M^$, and then proceeds to process S 199.

In process S 199, the motor controller 100 sets the estimated total moment of inertia $J^$, estimated viscous friction coefficient $D_M^$, estimated steady disturbance torque value $d_M^$ in the rigid-body model 93 (see FIG. 5), and proceeds to process S200. In process S200, the motor controller 100 sets the current filtered motor rotational speed $\omega_{MF}$ as the initial estimated rigid-body rotational speed value $\omega_{RD}^\_0$ to be given to the rigid-body model 93, and proceeds to process 5201.

In process S201, the motor controller 100 starts rigid-body model calculation, and then proceeds to process S202 immediately. In process S202, the motor controller 100 starts resonant model parameter identification and proceeds to decision process S203. In decision process S203, the motor controller 100 determines the absolute value of the acceleration $\alpha_{MF}$ calculated from the filtered motor rotational speed $\omega_{MF}$. If the absolute value of $\alpha_{MF}$ is smaller than a prescribed value $\alpha_I$ (producing a Yes result), the motor controller 100 proceeds to process S204, where the motor controller 100 terminates the resonant model parameter identification.

If the absolute value of $\alpha_{MF}$ is equal to greater than the prescribed value $\alpha_I$ (producing a No result in process S203), the motor controller 100 proceeds to decision process S205, where the motor controller 100 determines the absolute value of the filtered motor rotational speed $\omega_{MF}$. If the absolute value of $\omega_{MF}$ is smaller than a prescribed value $\omega_I$ in decision process S205, the motor controller 100 proceeds process S204, where the motor controller 100 terminates the resonant model parameter identification.

If the absolute value of $\omega_{MF}$ is equal to or greater than the prescribed value $\omega_I$ (producing a No result in process S205), the motor controller 100 returns to decision process S203. Upon the completion of the resonant model parameter identification in process S204, the motor controller 100 moves to process S206, where the motor controller 100 performs conversion calculation in the discrete/continuous parameter converter 97 (see FIG. 5) so as to convert the previously estimated parameter vector value $\theta^ (N - 1)$ to continuous parameters, that is, the machine-system estimated anti-resonant angular frequency value $\omega a^$ and machine-system estimated anti-resonant-point attenuation coefficient $\xi a^$, and proceeds to process S207. In process S207, the motor controller 100 sets the speed control gain crossover angular frequency $\omega_s$ to $\omega a^$ multiplied by 2 and also sets the position control gain crossover angular frequency $\omega p$ to $\omega a^$ divided by 3.5. Then motor controller 100 sets the gain for the speed and position control unit (S207). This completes the parameter adjustment.

Second embodiment

In the first embodiment, the motor torque value $\tau_M$ input to the auto tuner 11 has been calculated from the q-axis current command value Iq*, but it can also be calculated from the detected torque current value Iq.

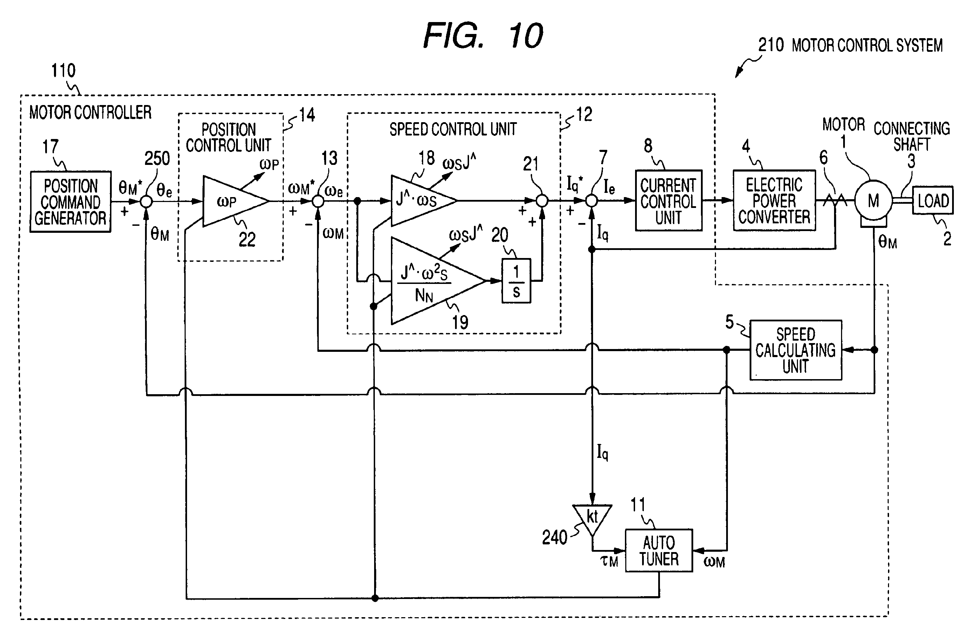

The motor control system 210 in a second embodiment, shown in FIG. 10, includes a motor controller 110; in the motor controller 110, an amplifier 240 multiplies the detected torque current value Iq by a value equivalent to the torque constant of the motor 1 to calculate the motor torque value $\tau_M$.

Third embodiment

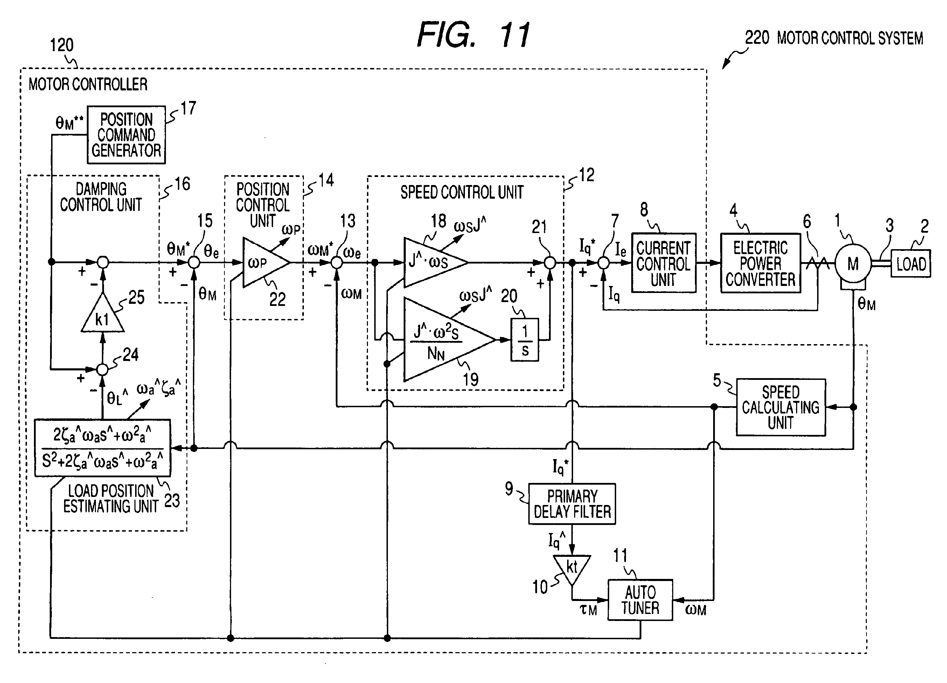

A third embodiment of the present invention will be described below with reference to FIG. 11. The motor controller 120 in the third embodiment differs from the first embodiment in that a damping control unit 16 is provided among the position command generator 17, the position control unit 14, a subtracter 15, that is, the damping control unit 16 and subtracter 15 are provided between the position command generator 17 and position control unit 14.

The damping control unit 16 includes a load position estimating unit 23 that receives the detected motor position value $\theta_M$ and outputs an estimated load position value $\theta_L{}^\wedge$. Its transmission characteristics are represented as in equation (39)

$$\theta_L{}^\wedge = \theta_M \cdot (2\zeta_a{}^\wedge\omega_a{}^\wedge \cdot s + \omega_a{}^\wedge) / (s^2 + 2\zeta_a{}^\wedge\omega_a{}^\wedge s + \omega_a{}^\wedge 2) \quad\cdots\cdots\cdots\cdots (39)$$

The subtracter 24 subtracts the estimated load position value $\theta_L{}^\wedge$ from a dumping control input command value $\theta_M{}^{**}$ output from the position command generator 17 and calculates an estimated axis twist value. A dumping control amplifier 25 amplifies the estimated axis twist value calculated by the subtracter 24 by k1, which is equal to or greater than 0 and less than 1, and outputs the multiplication result. The subtracter 26 subtracts the output from the amplifier 25 from the dumping control input command value $\theta_M{}^{**}$ and outputs a position command in which the axis twist is alleviated as a position control input command $\theta_M{}^*$.

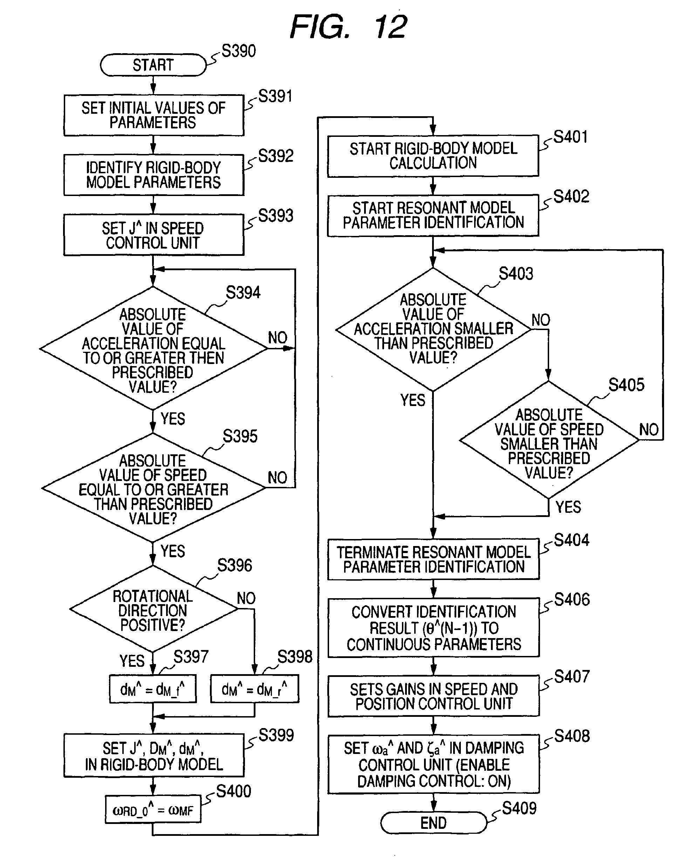

An advantage in this embodiment in the operation of the damping control unit 16 is that the auto tuner 11 sets the machine-system estimated anti-resonant angular frequency value wa^ and machine-system estimated anti-resonant-point attenuation coefficient $\zeta$a^, which are required for calculation according to equation (39). Damping control can thereby be achieved with high accuracy, without adjustment being involved. Parameter identification by the auto tuner 11 in the third embodiment is the same as in the first embodiment, so its explanation will be omitted and only the entire sequence in parameter adjustment will be described below with reference to FIG. 12.

The motor controller 120 starts parameter identification in S390. The motor controller 120 then sets initial parameter values in the speed control unit 12 and position control unit 14 and disables damping control (S391). Specifically, the motor controller 120 sets $N_N$ to 10, $\omega_s$ to $2\pi \times 30$ Hz, $\omega_P$ to $\omega_S/7$, and J^ to the moment of inertia of the motor alone, and also sets k1 to 0 so as to disable damping control. The motor controller 120 then identifies only the rigid-body model parameters online in process S392 to obtain the estimated total moment of inertia J^, the estimated viscous friction coefficient $D_M{}^\wedge$, the estimated steady disturbance torque value $d_M{}^\wedge\_f$ during the forward rotation, and the estimated steady disturbance torque value $d_M{}^\wedge\_r$ during the reverse rotation.

Next, the motor controller 120 sets the estimated total moment of inertia J^ in the speed control unit in process S393, and proceeds to decision process S394. In decision process S394, the motor controller 120 calculates acceleration $\alpha_{MF}$ from the filtered motor rotational speed $\omega_{MF}$, and determines whether the absolute value of $\alpha_{MF}$ is equal to or greater than the prescribed value $\alpha$A. If a Yes result is produced in decision process S394, the motor controller 120 proceeds to decision process S395, where the motor controller 120 determines whether the absolute value of the filtered motor rotational speed $\omega_{MF}$ is equal to or greater than the prescribed value $\omega_A$. If the absolute value is less than the prescribed value $\omega_A$ (producing a No result in S395), the motor controller 120 repeats decision process S394.

If the absolute value is equal to or greater than the prescribed value $\omega_A$ (producing a Yes result in S395), the motor controller 120 moves to decision process S396. In decision process S396, the motor controller 120 determines the direction of rotation from the sign of the filtered motor rotational speed $\omega_{MF}$. If $\omega_{MF}$ is greater than 0 (producing a Yes result in decision process S396), the motor controller 120 proceeds to process S397, where the motor controller 120 sets the estimated steady disturbance torque value $d_M{}^\wedge\_f$ during the forward rotation as the estimated steady disturbance torque value $d_M{}^\wedge$, and then proceeds to process S399.

If $\omega_{MF}$ is not greater than 0 (producing a No result in S396), the motor controller 120 proceeds to process S398, where the motor controller 120 sets the estimated steady disturbance torque value $d_M{}^\wedge\_r$ during the reverse rotation as the estimated steady disturbance torque value $d_M{}^\wedge$, and then proceeds to process S399. In process S399, the motor controller 120 sets the estimated total moment of inertia $J^\wedge$, estimated viscous friction coefficient $D_M^\wedge$, and estimated steady disturbance torque value $d_M^\wedge$ in the rigid-body model 93 (see FIG. 5).

In process S400, the motor controller 120 sets the current filtered motor rotational speed $\omega_{MF}$ as the initial estimated rigid-body rotational speed value $\omega_{RD}^\wedge\_0$ to be given to the rigid-body model 93. In process S401, the motor controller 120 starts rigid-body model calculation, and then proceeds to process S402 immediately, where the 120 starts resonant model parameter identification.

In decision process S403, the motor controller 120 determines the absolute value of the acceleration $\alpha_{MF}$ calculated from the filtered motor rotational speed $\omega_{MF}$. If the absolute value of $\alpha_{MF}$ is smaller than the prescribed value $\alpha_I$ (producing a Yes result in S403), the motor controller 120 proceeds to process S404, where the motor controller 120 terminates the resonant model parameter identification. If the absolute value of $\alpha_{MF}$ is equal to greater than the prescribed value $\alpha_I$ (producing a No result in decision process S403), the motor controller 120 proceeds to decision process S405, where the motor controller 120 determines the absolute value of the filtered motor rotational speed $\omega_{MF}$. If the absolute value of $\omega_{MF}$ is smaller than the prescribed value $\omega_I$ (producing a Yes result in decision process S405), the motor controller 120 proceeds process S404, where the motor controller 120 terminates the resonant model parameter identification. If the absolute value of $\omega_{MF}$ is equal to or greater than the prescribed value $\omega_I$ (producing a No result in decision process S405), the motor controller 120 returns to decision process S403.

Upon the completion of the resonant model parameter identification in process S404, the motor controller 120 proceeds to process S406, where the motor controller 120 performs conversion calculation in the discrete/continuous parameter converter 97 (see FIG. 5) so as to convert the previously estimated parameter vector value $\theta^\wedge$ (N - 1) to the machine-system estimated anti-resonant angular frequency value $\omega a^\wedge$ and machine-system estimated anti-resonant-point attenuation coefficient $\zeta a^\wedge$. In process S407, the motor controller 120 sets the speed control gain crossover angular frequency $\omega_S$ to $\omega a^\wedge$ multiplied by 2 and also sets the position control gain crossover angular frequency $\omega p$ to $\omega a^\wedge$ divided by 3.5. Then, the motor controller 120 proceeds to process S408, where the motor controller 120 sets the machine-system estimated anti-resonant angular frequency value $\omega a^\wedge$ and machine-system estimated anti-resonant-point attenuation coefficient $\zeta a^\wedge$ in the load position estimating unit 23 in the damping control unit 16 (see FIG. 11) and then sets the damping control amplifier k1 to, for example, 0.5 to enable damping control. This completes the parameter adjustment.

Fourth embodiment

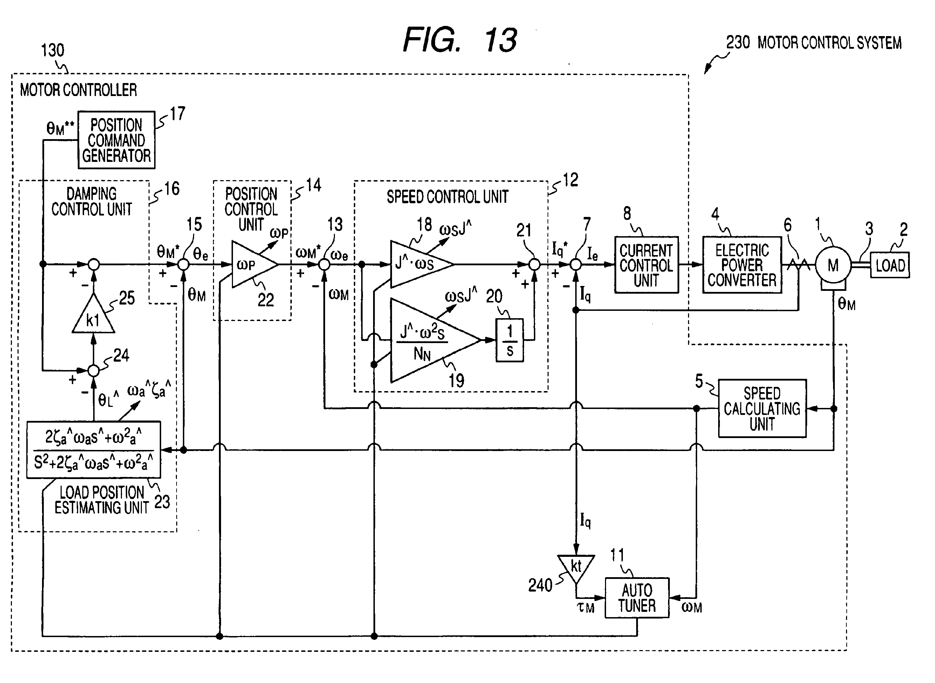

A fourth embodiment of the present invention will be then described with reference to the block diagram in FIG. 13.

The fourth embodiment differs from the third embodiment in that the motor torque value $\tau_M$ used in the auto tuner 11 is calculated by a different method. Specifically, although the motor torque value $\tau_M$ has been derived from the torque current command value Iq* in the third embodiment, a motor controller 130 in the fourth embodiment has an amplifier 240 multiply the detected torque current value Iq by a value equivalent to the torque constant of the motor 1 to calculate the motor torque value $\tau_M$.

Variation

The present invention is not restricted to the above embodiments. A variation described below, for example, is applicable.

Although, in the above embodiments, a position control unit is provided in front of the proportional amplifier 18 so as to perform position control, speed control can be performed without having to use a position control unit. In this case, the motor rotational speed command value $\omega_M$* is used as the target command value.

**Claims**

1. A motor controller for performing pulse width control for a motor (1) connected to a load (2) through a connecting shaft according to a target command value and a motor current that flows in the motor (1), the motor controller comprising

   an auto tuner (11) that receives a motor (1) torque value and motor (1) rotational speed of the motor (1) as input signals and automatically adjusts control parameters used for the pulse width control,

   **characterized in that**

   the auto tuner (11) is configured to handle a machine system including the motor, the connecting shaft, and the load, as a rigid-body model (76) and a resonant model (77) that are connected in series, where the resonant model (77) is divided from the rigid-body model (76); and that

   the auto tuner (11) has a parameter identifying means which uses a recursive least square method for separately identifying parameters set in the rigid-body model (76) and parameters set in the resonant model.

2. The motor controller according to claim 1, further comprising:

a position control unit (14) for outputting a speed command value according to a difference between a detected position value of the motor (1) and a position command value, which is the target command value and;
a speed control unit (12) for outputting a torque current command value according to a difference between the speed command value and the motor (1) rotational speed; and
a speed control unit (12) for adjusting an output current from the electric power converter according to a difference between the torque current command value and a detected torque current value supplied to the motor (1); wherein the auto tuner (11) automatically adjusts the control parameters used by the position control unit (14) and the speed control unit (12).

3. The motor controller according to claim 2, wherein the auto tuner (11) determines control gains of the position control unit (14) and the speed control unit (12) according to identified values of the parameters of the rigid-body model (76) and the resonant model (77) that are connected in series.

4. The motor controller according to claim 2, wherein the motor (1) torque value is a value resulting from a multiplication of a value obtained by passing the torque current command value through a first-order lag filter (9) by a torque constant of the motor (1) or anther value resulting from a multiplication of the detected torque current value by the torque constant of the motor (1).

5. The motor controller according to claim 1, wherein, to estimate a rigid-body rotational speed, the auto tuner (11) first identifies the parameters set in the rigid-body model (76), sets an identification result in the rigid-body model (76) prepared in advance, and then calculates the rigid-body model (76).

6. The motor controller according to claim 1 or 5, wherein the auto tuner (11) identifies the parameters set in the resonant model (77) by applying a recursive least square method to both the estimated rigid-body rotational speed and the motor (1) rotational speed, which are time-series data.

7. The motor controller according to claim 5, wherein:

the parameters set in the rigid-body model (76) are an estimated total moment of inertia of a machine system including the motor, the connecting shaft, and the load, an estimated viscous friction coefficient, and an estimated steady disturbance torque value; and
the estimated steady disturbance torque value varies according to a direction of motor (1) rotation.

8. The motor controller according to claim 5 or 6, wherein a calculation of the rigid-body model (76) and a calculation for identifying the parameters set in the resonant model (77) are performed when either or both of the magnitude of the motor (1) rotational speed and the magnitude of a change in the motor (1) rotational speed with time are equal to or greater than a prescribed value that is set in advance.

9. The motor controller according to claim 5, wherein an integrator in the rigid-body model (76) is initialized to a value obtained by filtering the motor (1) rotational speed when the calculation of the rigid-body model (76) starts.

10. The motor controller according to claim 2, further comprising a damping control unit for generating a damping position command value according to the position command value; wherein the position control unit (14) outputs a speed command value according to a difference between the damping position command value and the detected position value of the motor.

11. The motor controller according to claim 10, wherein the auto tuner (11) determines control gains of the position control unit (14) and the speed control unit (12) as well as parameters for a load (2) position estimating unit in the damping control unit, according to identified values of parameters in the machine system.

12. A motor control system that has a motor connected to a load through a connecting shaft, an electric power converter for driving the motor, and a motor controller according to any of the claims 1 to 11 for performing pulse width control for the electric power converter.

**Patentansprüche**

1. Motorsteuerung zur Durchführung einer Puls-Breiten-Steuerung für einen Motor (1), der an eine Last (2) durch eine Verbindungswelle angeschlossen ist, entsprechend einem Soll-Befehlswert und einem Motorstrom, der in den Motor (1) fließt, wobei die Motorsteuerung umfasst:

   einen Autotuner (11), der einen Motor-Drehmomentwert und eine Motor-Drehzahl des Motors (1) als Eingangssignale erhält und die Steuerparameter, die in der Puls-Breiten-Steuerung verwendet werden, automatisch anpasst,
   **dadurch gekennzeichnet, dass**
   der Autotuner (11) konfiguriert ist, um ein Maschinensystem einschließlich dem Motor, der Verbindungswelle und der Last als Modell (76) starrer Körper und ein Resonanzmodell (77),
   die in Reihe geschaltet sind, zu handhaben, wobei das Resonanzmodell (77) von dem Modell (76) starrer Körper getrennt ist, und dass
   der Autotuner (11) Mittel zur Identifizierung eines Parameters hat, welches ein rekursives Verfahren der kleinsten Quadrate verwendet, um Parameter, die in dem Modell (76) starrer Körper gesetzt sind, und Parameter, die in dem Resonanzmodell gesetzt sind, separat zu identifizieren.

2. Motorsteuerung nach Anspruch 1, ferner umfassend:

   eine Positionssteuereinheit (14) zum Ausgeben eines Geschwindigkeits-Steuerungswertes entsprechend einer Differenz zwischen dem erfassten Positionswert des Motors (1) und einen Positions-Befehlswert, der der Soll-Befehlswert ist, und;
   eine Geschwindigkeitssteuereinheit (12) zum Ausgeben eines Drehmomentstrom-Befehlswertes entsprechend einer Differenz zwischen dem Geschwindigkeits-Befehlswert und der Motordrehzahl; und
   eine Geschwindigkeits-Steuereinheit (12) zur Einstellung eines Ausgangsstromes von dem elektrischen Stromumsetzer entsprechend einer Differenz zwischen dem Drehmomentstrom-Befehlswert und einem detektierten Drehmomentstrom-Wert, der zu dem Motor (1) geliefert wird; worin
   der Autotuner (11) die Steuerparameter automatisch einstellt, die von der Positions-Steuereinheit (14) und der Drehzahl-Steuereinheit (12) verwendet werden.

3. Motorsteuerung nach Anspruch 2, worin der Autotuner (11) Ausgangsverstärkungen der Positions-Steuereinheit (14) und der Drehzahl-Steuereinheit (12) entsprechend den identifizierten Werten der Parameter des Modells (76) starrer Körper und des Resonanzmodells (77) bestimmt, die in Reihe geschaltet sind.

4. Motorsteuerung nach Anspruch 2, worin der Motor-Drehmomentwert ein Wert ist, der sich aus einer Multiplikation eines Wertes, der durch Durchleiten des Drehmomentstrom-Steuerungswertes durch einen Lag-Filter (9) erster Ordnung erhalten wird, mit einer Drehmomentkonstanten des Motors (1) oder einem anderen Wert ergibt, der sich aus einer Multiplikation des erfassten Drehmomentstromwertes mit der Drehmomentkonstanten des Motors (1) ergibt.

5. Motorsteuerung nach Anspruch 1, worin, um die Drehzahl eines starren Körpers abzuschätzen, der Autotuner (11) zuerst die Parameter identifiziert, die in dem Modell (76) starrer Körper gesetzt sind, ein Identifikationsergebnis in dem Modell (76) starrer Körper setzt, das vorab aufgestellt wurde, und dann das Modell (76) starrer Körper berechnet.

6. Motorsteuerung nach Anspruch 1 oder 5, worin der Autotuner (11) die in dem Resonanzmodell (77) gesetzten Parameter **dadurch** identifiziert, dass ein rekursives Verfahren der kleinsten Quadrate sowohl auf die abgeschätzte Drehzahl des starren Körpers als auch die Motor-Drehzahl angewendet wird, die zeitserielle Daten sind.

7. Motorsteuerung nach Anspruch 5, worin
   die in dem Modell (76) starrer Körper gesetzten Parameter einen geschätzten Gesamtbetrag der Trägheit eines Maschinensystems mit einem Motor, der Verbindungswelle und der Last, einen geschätzten Viskose-Reibungskoeffizient und einen geschätzten Drehmomentwert bei stetiger Störung umfassen; und
   der geschätzte Drehmomentwert bei stetiger Störung entsprechend einer Richtung der Motordrehung variiert.

8. Motorsteuerung nach Anspruch 5 oder 6, worin eine Berechnung des Modells (76) starrer Körper und eine Berechnung zur Identifizierung der in dem Resonanzmodell (77) gesetzten Parameter durchgeführt wird, wenn die Größe der Motordrehzahl oder die Größe einer Änderung in der Motordrehzahl mit der Zeit oder beide Werte gleich oder größer sind als ein vorgegebener Wert, der vorab eingestellt ist.

9. Motorsteuerung nach Anspruch 5, worin ein Integrator in dem Modell (76) starrer Körper zu einem Wert initialisiert wird, der durch Filtern der Motordrehzahl erhalten wird, wenn die Berechnung des Modells (76) starrer Körper startet.

10. Motorsteuerung nach Anspruch 2, ferner umfassend eine Dämpfungs-Steuereinheit zur Erzeugung eines Dämpfungs-Positionssteuerungswertes entsprechend den PositionsSteuerungswert; worin die Positionssteuereinheit (14) einen Drehzahl-Steuerungswert entsprechend einer Differenz zwischen dem Dämpfungs-Positionssteuerungswert und dem detektierten Positionswert des Motors ausgibt.

11. Motorsteuerung nach Anspruch 10, worin der Autotuner (11) Ausgangsverstärkungen der Positions-Steuereinheit (14) und der Drehzahl-Steuereinheit (12) sowie Parameter für eine Lastpositions-Abschätzungseinheit in der Dämpfungssteuereinheit entsprechend identifizierten Werten von Parametern in dem Maschinensystem bestimmt.

12. Motorsteuerungssystem, das einen Motor, der mit einer Last durch eine Verbindungswelle verbunden ist, einen elektronischen Stromumsetzer zum Antreiben des Motors und eine Motorsteuerung entsprechend den Ansprüchen 1 bis 11 zur Puls-Breiten-Steuerung für einen elektrischen Umsetzer hat.

**Revendications**

1. Contrôleur de moteur pour réaliser le contrôle de la durée de l'impulsion pour un moteur (1) connecté à une charge (2) par un arbre de transmission en fonction d'une valeur de commande cible et un courant de moteur qui s'écoule dans le moteur (1), le contrôleur de moteur comprenant:

   - un auto tuner (11) qui reçoit une valeur de couple de moteur (1) et une vitesse de rotation de moteur (1) du moteur (1) comme les signaux d'entrée et fait ajuster automatiquement les paramètres de contrôle utilisés pour le contrôle de la durée de l'impulsion,
   **caractérisé en ce que**
   - l'auto tuner (11) est configuré pour manipuler un système de machine incluant le moteur, l'arbre de transmission, et la charge, comme un modèle de corps rigide (76) et un modèle résonnant (77) qui sont connectés en série, où le modèle résonnant (77) est divisé du modèle de corps rigide (76); et que
   - l'auto tuner (11) présente un moyen d'identification de paramètres qui utilise une méthode récursive des moindres carrés pour identifier séparément le jeu de paramètres dans le modèle de corps rigide (76) et le jeu de paramètres dans le modèle résonnant.

2. Contrôleur de moteur selon la revendication 1, comprenant de plus:

   - une unité de contrôle de position (14) pour faire sortir une valeur de commande de vitesse en fonction d'une différence entre une valeur de position détectée du moteur (1) et une valeur de commande de position, qui est la valeur de commande cible et;
   - une unité de contrôle de vitesse (12) pour faire sortir une valeur de commande du courant de couple en fonction d'une différence entre la valeur de commande de vitesse et la vitesse de rotation du moteur (1); et
   - une unité de contrôle de vitesse (12) pour faire ajuster le courant de sortie du convertisseur de puissance électrique en fonction d'une différence entre la valeur de commande du courant de couple et une valeur du courant de couple détectée fournie au moteur (1); où l'auto tuner (11) fait ajuster automatiquement les paramètres de contrôle utilisés par l'unité de contrôle de position (14) et l'unité de contrôle de vitesse (12).

3. Contrôleur de moteur selon la revendication 2, où l'auto tuner (11) détermine les gains de contrôle de l'unité de contrôle de position (14) et de l'unité de contrôle de vitesse (12) en fonction des valeurs identifiées des paramètres du modèle de corps rigide (76) et du modèle résonnant (77) qui sont connectés en série.

4. Contrôleur de moteur selon la revendication 2, où la valeur de couple du moteur (1) est une valeur résultant d'une multiplication d'une valeur obtenue en passant la valeur de commande de courant de couple par un filtre retard du premier ordre (9) par une constante de couple du moteur (1) ou l'autre value résultant d'une multiplication de la valeur de courant de couple détectée par la constante de couple du moteur (1).

5. Contrôleur de moteur selon la revendication 1, où, pour estimer une vitesse de rotation du corps rigide, l'auto tuner (11) identifie d'abord le jeu de paramètres dans le modèle de corps rigide (76), établit un résultat d'identification dans le modèle de corps rigide (76) préparé en avance, et puis calcule de modèle de corps rigide (76).

6. Contrôleur de moteur selon la revendication 1 ou 5, où l'auto tuner (11) identifie le jeu de paramètres dans le modèle résonnant (77) en appliquant une méthode récursive des moindres carrés tant à la vitesse de rotation du corps rigide estimée qu'à la vitesse de rotation du moteur (1), qui sont des données de série dynamique.

7. Contrôleur de moteur selon la revendication 5, où:

   - le jeu de paramètres dans le modèle de corps rigide (76) sont un moment total d'inertie estimé d'un système de machine incluant le moteur, l'arbre de transmission, et la charge, un coefficient de frottement visqueux estimé, et une valeur constante de couple de perturbation estimée; et
   - la valeur constante de couple de perturbation estimée varie selon un sens de rotation du moteur (1).

8. Contrôleur de moteur selon la revendication 5 ou 6, où un calcul du modèle de corps rigide (76) et un calcul pour identifier le jeu de paramètres dans le modèle résonant (77) sont réalisés quand chacune ou toutes les deux de la magnitude de la vitesse de rotation du moteur (1) et la magnitude d'un changement dans la vitesse de rotation du moteur (1) avec le temps sont égales à ou plus grandes qu'une valeur prescrite qui est définie en avance.

9. Contrôleur de moteur selon la revendication 5, où un intégrateur dans le modèle de corps rigide (76) est initialisé à une valeur obtenue en filtrant la vitesse de rotation du moteur (1) quand le calcul du modèle de corps rigide (76) commence.

10. Contrôleur de moteur selon la revendication 2, comprenant de plus une unité de contrôle d'amortissement pour générer une valeur de commande de position d'amortissement en fonction de la valeur de commande de position; où l'unité de contrôle de position (14) fait sortir une valeur de commande de vitesse en fonction d'une différence entre la valeur de commande de position d'amortissement et la valeur de position détectée du moteur.

11. Contrôleur de moteur selon la revendication 10, où l'auto tuner (11) détermine les gains de contrôle de l'unité de contrôle de position (14) et de l'unité de contrôle de vitesse (12) aussi bien que les paramètres pour une unité à estimer la position de la charge (2) dans l'unité de contrôle d'amortissement, en fonction des valeurs identifiées des paramètres dans le système de machine.

12. Un système de contrôle de moteur qui présente un moteur connecté à une charge par un arbre de transmission, un convertisseur de puissance électrique pour entraîner le moteur, et un contrôleur de moteur selon l'une quelconque des revendications 1 à 11 pour réaliser le contrôle de la durée de l'impulsion pour le convertisseur de puissance électrique.

FIG. 1

FIG. 2

*FIG. 3A*

*FIG. 3B*

# FIG. 4

# FIG. 5

EP 1 968 184 B1

# FIG. 6

RIGID-BODY MODEL
93

# FIG. 7

*FIG. 8*

# FIG. 9

START — S190

SET INITIAL VALUES OF PARAMETERS — S191

IDENTIFY RIGID-BODY MODEL PARAMETERS — S192

SET $J^\wedge$ IN SPEED CONTROL UNIT — S193

ABSOLUTE VALUE OF ACCELERATION EQUAL TO OR GREATER THEN PRESCRIBED VALUE? — S194 — NO

YES

ABSOLUTE VALUE OF SPEED EQUAL TO OR GREATER THAN PRESCRIBED VALUE? — S195 — NO

YES

ROTATIONAL DIRECTION POSITIVE? — S196 — NO

YES — S197 | NO — S198

$d_M{}^\wedge = d_{M\_f}{}^\wedge$ | $d_M{}^\wedge = d_{M\_r}{}^\wedge$

SET $J^\wedge$, $D_M{}^\wedge$, $d_M{}^\wedge$, IN RIGID-BODY MODEL — S199

$\omega_{RD\_0}{}^\wedge = \omega_{MF}$ — S200

START RIGID-BODY MODEL CALCULATION — S201

START RESONANT MODEL PARAMETER IDENTIFICATION — S202

ABSOLUTE VALUE OF ACCELERATION SMALLER THAN PRESCRIBED VALUE? — S203 — NO

YES

ABSOLUTE VALUE OF SPEED SMALLER THAN PRESCRIBED VALUE? — S205 — NO

YES

TERMINATE RESONANT MODEL PARAMETER IDENTIFICATION — S204

CONVERT IDENTIFICATION RESULT $(\theta^\wedge(N-1))$ TO CONTINUOUS PARAMETERS — S206

SETS GAINS IN SPEED AND POSITION CONTROL UNIT — S207

END — S208

24

*FIG. 10*

FIG. 11

220 MOTOR CONTROL SYSTEM

120 MOTOR CONTROLLER

# FIG. 12

**START** — S390

SET INITIAL VALUES OF PARAMETERS — S391

IDENTIFY RIGID-BODY MODEL PARAMETERS — S392

SET $J^\wedge$ IN SPEED CONTROL UNIT — S393

S394 — ABSOLUTE VALUE OF ACCELERATION EQUAL TO OR GREATER THEN PRESCRIBED VALUE? — NO

YES

S395 — ABSOLUTE VALUE OF SPEED EQUAL TO OR GREATER THAN PRESCRIBED VALUE? — NO

YES

S396 — ROTATIONAL DIRECTION POSITIVE? — NO

YES — S397 — $d_M{}^\wedge = d_{M\_f}{}^\wedge$

S398 — $d_M{}^\wedge = d_{M\_r}{}^\wedge$

SET $J^\wedge$, $D_M{}^\wedge$, $d_M{}^\wedge$, IN RIGID-BODY MODEL — S399

$\omega_{RD\_0}{}^\wedge = \omega_{MF}$ — S400

START RIGID-BODY MODEL CALCULATION — S401

START RESONANT MODEL PARAMETER IDENTIFICATION — S402

S403 — ABSOLUTE VALUE OF ACCELERATION SMALLER THAN PRESCRIBED VALUE? — NO

YES

S405 — ABSOLUTE VALUE OF SPEED SMALLER THAN PRESCRIBED VALUE? — NO

YES

TERMINATE RESONANT MODEL PARAMETER IDENTIFICATION — S404

CONVERT IDENTIFICATION RESULT ($\theta^\wedge(N-1)$) TO CONTINUOUS PARAMETERS — S406

SETS GAINS IN SPEED AND POSITION CONTROL UNIT — S407

SET $\omega_a{}^\wedge$ AND $\zeta_a{}^\wedge$ IN DAMPING CONTROL UNIT (ENABLE DAMPING CONTROL: ON) — S408

**END** — S409

27

FIG. 13

230 MOTOR CONTROL SYSTEM

130 MOTOR CONTROLLER

EP 1 968 184 B1

# FIG. 14

43
DESIGN
CALCULATION

42
IDENTIFYING
MECHANISM

44

r (t)  +  −

40
CONTROL
UNIT

u (t)

41
CONTROLLED
TARGET

y (t)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005168166 A
- JP 7001995 A

- JP 152429 A
- JP HEI71995152429 B
- JP 2004187432 A

**Non-patent literature cited in the description**

- Adaptive signal processing algorithm. **YOJI LIGUNI.** Baifukan. 2000

- **TUNGPATARATANAWONG S. et al.** High performance robust motion control of industrial robot using parameter identification based on resonant frequency. *INDUSTRIAL ELECTRONICS SOCIETY, 2004. IECON 2004. 30TH ANNUAL CONFERENCE OF IEEE BUSAN, SOUTH KOREA 2-6 NOV. 2004,* 02 November 2004, vol. 1, 111-116